# EUROPEAN PATENT APPLICATION

(11) **EP 0 959 336 A2**
(43) Date of publication of application: **24.11.1999**
(21) Application number: 99500084.1
(22) Date of filing: 20.05.1999
(51) Int. Cl.: G01M 3/28, G01M 3/02

(54) **Portable detector for malfunctions in power steering and pumps of industrial vehicles and machinery.**

(30) Priority: 22.05.1998 ES 9801071; 18.05.1999 ES 9901058
(71) Applicant: Manzanares Sobaberas, José, 08190 Mirasol San Cugat (Barcelona) (ES)
(72) Inventor: Manzanares Sobaberas, José, 08190 Mirasol San Cugat (Barcelona) (ES)
(74) Representative: Carpintero Lopez, Francisco

(57) **Abstract**

The detector is provided with a basic conduct in which is established an inlet sector (1) and an outlet sector (2) provided with means of coupling for placing these in the hydraulic circuit to be checked, placing a flow meter (6) in the inlet sector (1) after which said inlet sector (1) ends in an inlet (10) of a distributor (7), with two outlets, one outlet (9) to a pressure gauge (5) and one outlet (8) communicating with the outlet (2) of the basic conduct (1-2) where a two-way valve is placed, allowing to open or close this basic conduct, so that when valve (3) is open the flow meter (6) is active and when it is closed the pressure gauge (5) is active, in order to compare real pressure and flow values and theoretical values supplied by the manufacturer of the equipment being tested.

## Description

### OBJECT OF THE INVENTION

The invention relates to a device designed for checking hydraulic systems of vehicles, allowing on-site detection, that is, on the vehicle or industrial machinery concerned, of possible malfunctions related to fluid leaks based on a simple flow distributor with pressure inlet and outlet tubes, a pressure gauge, a flow meter and a check valve with two positions, one for checking for possible malfunctions in the power steering and another for checking for malfunctions in the pump.

It is the object of the invention to provide the automobile market, and more specifically repair shops or even individuals with a portable device consisting of a small box with a pressure gauge, a flow meter, a two-way or two-position valve and a pair of connections (inlet and outlet) for coupling to the corresponding hydraulic outlet circuit of the vehicle or machine pump, so that if the pressure and flow indicated by the detector do not agree with those indicated by the manufacturer this would imply the existence of a leak or malfunction. Therefore, the novelty of the detector is to check the entire hydraulic system of the vehicle without having to disassemble the elements thus obtaining a total certainty in diagnosis of malfunctions.

### BACKGROUND OF THE INVENTION

At this time the most common way of detecting malfunctions in power steering or pressure pumps in vehicles or industrial machinery involves performing a visual check for loss of fluid.

However, shops specialising in steering boxes or hydraulic systems normally use a static test bench, which due to its volume and weight cannot perform the check directly on the vehicle, requiring the power steering or pump to be disassembled and taken to the above mentioned test bench to verify the possible malfunction.

Obviously, disassembly of these elements of the vehicle, whether the pump or the power steering has great problems and disadvantages, not only from a mechanical point of view but due to the considerable time required, the specialisation of the labour and in addition the time required for reassembly.

In addition, the results are not 100% reliable as when the cause of the malfunction is an impact suffered by the vehicle in disassembling its power steering this important configuration in detection of the malfunction is lost.

Aside from this, checking of the elements which make up the power steering on the static bench is always done separately, either the pressure pump or the power steering, disassembly of these elements being necessary in the event of uncertainty.

Therefore, in view of the considerable expense of the static test bench on the one hand and the expense to the vehicle owner resulting from requiring the assembly/disassembly of the power steering or pump, as well as the necessary use of specialised labour for all these operations, a simpler and less expensive system for detecting malfunctions in power steering and pumps of vehicles and industrial machinery would obviously be desirable and of significance.

This problem can be extended to cases where the malfunction does not result from a leak but to a loss of flow in the hydraulic system, such as a deformation of one of the conducts with its ensuing strangling, a loss of flow which does not affect the circuit pressure but nevertheless causes a malfunction of the hydraulic installation.

### DESCRIPTION OF THE INVENTION

The portable detector proposed has been conceived for fully solving the above mentioned problems by a simple and effective solution, as it is based on checking the entire hydraulic system in the vehicle itself, without having to disassemble the elements and therefore with a full certainty of malfunction diagnosis, by placing the detector at the pump pressure outlet in order to locate the problem of the malfunction or leak.

More specifically, the detector of the invention consists of a body of any configuration, in which by machining or any other conventional means a conduct is created with two ends, an inlet one and an outlet one, provided with a means for coupling to place the detector at the pump pressure outlet of the vehicle or machine involved, with the particularity of providing a pressure gauge at this conduct to indicate pressure and a two-way or other type valve which depending on its position can allow checking the pump or the power steering, with the closed valve position allowing to check the pump, in which case the pressure gauge will provide the total outlet pressure at the pump, while the open valve position will allow to check the power steering, with the full liquid flow passing through the power steering distributor, in no case having to exchange the connections to the vehicle's circuit since it is sufficient to change the position of the valve as described here.

According to another characteristic of the invention, the aforementioned conduct is optionally provided with a flow meter to check the real flow in the hydraulic system in its normal operation conditions against the theoretical flow indicated by the manufacturer of the vehicle or industrial machinery involved, so that without varying the detector arrangement referred to above and in the open valve position, flow through said circuit can be known in order to determine whether the malfunction is caused by a fluid leak or a strangulation of the conducts or any point of the hydraulic installation.

By using this portable detector of simple construction, it is not necessary to disassemble the vehicle's power steering or pump, thus reducing the time employed and therefore the cost of detecting the malfunction, in addition allowing to detect not only the fault in the power steering but also in the hydraulic pump, as well as not requiring bulky and expensive static test benches nor specialised labour to operate the detector.

### DESCRIPTION OF THE DRAWINGS

As a complement of this description and in order to aid a better understanding of the characteristics of the invention according to an example of a preferred embodiment of the same, as an integral part of this description are attached a set of drawings where for purposes of illustration and with a non-limiting nature the following is shown:

Figure 1.- Shows a schematic representation of a portable malfunction detector according to the most complete version projected for it, in which it can control both the pressure and flow of the hydraulic circuit under analysis.

Figure 2.- Shows, also in a schematic representation, a specific physical embodiment of the portable detector of the previous figure.

### PREFERRED EMBODIMENT OF THE INVENTION

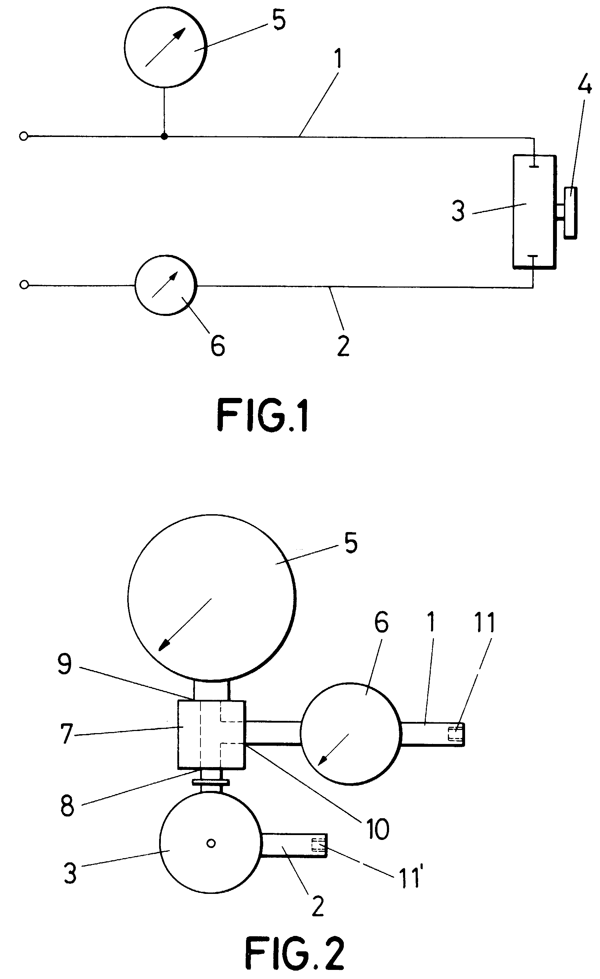

In view of these figures, particularly figure 1, it is possible to see how a portable detector according to the invention comprises a conduct with an inlet sector (1) and an outlet sector (2), between which is placed a two-way valve (3), provided with the corresponding manual control (4) for valvular change, establishing in one of these sectors, such as inlet sector (1), a pressure gauge (5), obviously tapped, with the additional characteristic that in one of sectors (1-2) there is also a flow meter (6), naturally in series with the valve (3).

In the physical construction of the detector according to the representation of figure 2, valve (3) is placed in the conduct outlet sector (2), said valve (3) communicating or not to a distributor (7) provided with an outlet (8) for coupling to outlet (2) through valve (3), also provided with an outlet (9) for coupling to the pressure gauge (5) and with an inlet (10) for connection of the inlet sector (1) of the general conduct of the device, in which the flow meter (6) is placed, having both at the inlet (1) and the outlet (2) the necessary hoses or connectors (11-11') to place the device in the hydraulic circuit to be checked.

According to this arrangement, the operation of the detector is the following:

When a possible malfunction in the vehicle pump must be checked the detector is placed in the hydraulic circuit at the pump outlet, placing valve (3) in the closed position, so that pressure gauge (5) will indicate the pressure supplied by the pump, so that if this pressure agrees with the one indicated by the manufacturer, one can rule out that said element or pump is responsible for the malfunction by a leak in the power steering hydraulic system, and one can proceed to check the next element, that is, the power steering itself. In this second case, without disconnecting the detector the position of valve (3) is set to check the power steering, that is, open, so that the fluid will pass through said valve (3) and from outlet (2) to the power steering, carrying out a data comparison as in the previous case.

In the event the data obtained in these two comparisons agree with the theoretical values, which means that the hydraulic system is free of leaks, the malfunction may be due to a reduction in circuit flow, then proceeding in this same open-valve arrangement to check the flow through conduct (1-2) with the flow meter (6), also checking whether this flow agrees with the theoretical value given by the manufacturer, otherwise determining that there is an anomaly in the circuit which causes strangulation at some point in it.

## Claims

1. Portable detector for malfunctions in power steering and pumps of vehicles and industrial machinery, which being capable of checking the hydraulic circuit of the power steering and its pump in the vehicle itself, or machinery involved, without having to disassemble these elements, is characterised in that it consists of a conduct with an inlet sector (1) and an outlet sector (2) between which is a two-way valve (3) allowing manual opening and closing of said conduct (1-2), in whose inlet sector (1) is a pressure gauge (5) which allows detecting any pressure drop in the hydraulic circuit caused by a leak in it, said sectors (1), (2) of the conduct ending in hoses or coupling means (11-11') which allow installing the device in the hydraulic circuit to be checked, preferably at the pump's pressure outlet.

2. Portable detector for malfunctions in power steering and pumps of vehicles and industrial machinery, as in claim 1, characterised in that in the closed position of valve (3) the pressure gauge indicates the pressure generated by the pump, allowing to compare this value of the real pressure with the theoretical value in order to check for leaks in the pump itself, while in the open valve position the pressure gauge (5) allows to check the pressure in the power steering in order to also compare the real and theoretical values.

3. Portable detector for malfunctions in power steering and pumps of vehicles and industrial machinery, as in previous claims, characterised in that at any suitable point of the basic conduct of the detector such as the inlet sector (1), a flow meter (6) is placed which allows comparison of the real flow passing through the circuit with the theoretical flow of the same.

4. Portable detector for malfunctions in power steering and pumps of vehicles and industrial machinery, as in previous claims, characterised in that between the two sectors (1-2) of the detector's basic conduct a distributor (7) is placed, provided with two outlets (8) and (9), one to the two-way valve (3) and the other to the pressure gauge (5), and with an inlet (10) coupled to the inlet sector (1) of the conduct, where the flow meter is placed, constituting the portable unit.
